# EUROPEAN PATENT APPLICATION

(11) **EP 4 588 987 A1**
(43) Date of publication of application: **23.07.2025**
(21) Application number: 23891967.4
(22) Date of filing: 14.11.2023
(51) Int. Cl.: C09J 7/40, C09J 7/30, C09J 7/22, C09J 133/00, C09J 183/04, H01M 50/198, H01M 50/197

(54) **THERMAL COMPRESSION FINISHING TAPE**

(30) Priority: 15.11.2022 KR 20220152836
(71) Applicant: LG Energy Solution, Ltd., Seoul 07335 (KR)
(72) Inventor: WON, Kwangho, Daejeon 34122 (KR); HYUN, Sungsik, Daejeon 34122 (KR); SHIN, Sewoo, Daejeon 34122 (KR); OH, Jung Shik, Daejeon 34122 (KR)
(74) Representative: Plasseraud IP
(86) International application number: PCT/KR2023/018233
(87) International publication number: WO 2024/106900

(57) **Abstract**

The present invention relates to a thermocompression finishing tape including a base material; a first adhesive layer stacked on one surface of the base material; an second adhesive layer stacked on the other surface of the base material; a first protective member provided on one surface of the first adhesive layer opposite to the base material; and a second protective member provided on one surface of the second adhesive layer opposite to the base material, wherein the second protective member is provided while protruding in an outward direction from at least one end portion of the second adhesive layer.

## Description

### [Technical Field]

This application claims priority to and the benefit of Korean Patent Application No. 10-2022-0152836 filed in the Korean Intellectual Property Office on November 15, 2022, the entire contents of which are incorporated herein by reference.

The present invention relates to a thermocompression finishing tape.

### [Background Art]

In general, a secondary battery refers to a battery that is chargeable and dischargeable unlike a primary battery that are not chargeable. The secondary battery is widely used in the field of high-tech electronic devices such as a phone, a laptop computer and a camcorder.

The stability of the secondary battery may be secured by a test for stability in which one surface is compressed with a press to measure an internal short.

Depending on a shape of a battery case, the secondary battery is classified into a cylindrical battery and a prismatic battery in which an electrode assembly is embedded in a cylindrical or prismatic metal case, and a pouch-type battery in which an electrode assembly is embedded in a pouch-type case made of an aluminum laminate sheet.

In a pouch-type lithium-ion secondary battery (polymer battery), an electrode assembly is placed in a pouch-shaped battery case. When an impact is applied to the battery due to a drop, or the like, the electrode assembly moves within the pouch, which causes the electrode to bend, causing a short-circuit, ignition, explosion, and the like. Accordingly, a finishing tape with a special function should be placed between the electrode assembly and the pouch to prevent the electrode assembly from moving within the pouch even when an impact is applied to the battery.

In general, a finishing tape used in pouch-type secondary batteries includes a first adhesive layer and an second adhesive layer, wherein an acrylic pressure sensitive adhesive (PSA) and a hot melt adhesive are coated on both surfaces of a base material of polypropylene (PP) or polyethylene terephthalate (PET) film, respectively. The finishing tape may have a protective tape attached to one surface of each of the first adhesive layer and the second adhesive layer to protect the first adhesive layer and the second adhesive layer.

The protective tape attached to one surface of the first adhesive layer is removed to temporarily adhere the finishing tape to the electrode assembly, and then the protective tape attached to one surface of the second adhesive layer is removed to adhere the second adhesive layer and the pouch.

When removing the protective tape attached to one surface of the second adhesive layer, the outermost layer of the electrode assembly is lifted due to the adhesive force between the protective tape and the second adhesive layer, resulting in an increase in appearance defect rate of the secondary battery.

### [Detailed Description of the Invention]

### [Technical Problem]

In view of the problems of the related art described above, the present invention is to provide a thermocompression finishing tape that prevents an outer shape of an electrode assembly from being deformed.

### [Technical Solution]

An exemplary embodiment of the present invention provides a thermocompression finishing tape including a base material; a first adhesive layer stacked on one surface of the base material; an second adhesive layer stacked on the other surface of the base material; a first protective member provided on one surface of the first adhesive layer opposite to the base material; and a second protective member provided on one surface of the second adhesive layer opposite to the base material, wherein the second protective member is provided while protruding in an outward direction from at least one end portion of the second adhesive layer.

An exemplary embodiment of the present invention provides the thermocompression finishing tape in which the first protective member and the second protective member include a porous film, respectively, and one surface of the porous film is release-treated.

An exemplary embodiment of the present invention provides the thermocompression finishing tape in which an auxiliary first adhesive layer is stacked on a surface of the second protective member opposite to the second adhesive layer.

An exemplary embodiment of the present invention provides the thermocompression finishing tape in which the second protective member includes an adhesive portion in direct contact with the second adhesive layer and a protrusion protruding outward from an end portion of the second adhesive layer, and the protrusion is folded once or more in a center direction of the second protective member.

An exemplary embodiment of the present invention provides the thermocompression finishing tape in which the second protective member is detached at a portion of the adhesive portion in contact with an edge of the second adhesive layer.

An exemplary embodiment of the present invention provides the thermocompression finishing tape in which the first adhesive layer is one or more selected from the group consisting of a rubber-based temporary-adhesive, an acrylic temporary-adhesive, and a silicone temporary-adhesive.

An exemplary embodiment of the present invention provides the thermocompression finishing tape in which a melting temperature of the second adhesive layer is lower than 140°C.

An exemplary embodiment of the present invention provides the thermocompression finishing tape in which the second adhesive layer includes any one or more of a hot melt adhesive, a heat-activated adhesive, and a pressure-sensitive adhesive.

An exemplary embodiment of the present invention provides the thermocompression finishing tape in which the base material has an insulation property.

An exemplary embodiment of the present invention provides the thermocompression finishing tape in which the base material includes a polymer resin film, and the polymer resin includes any one or more of polyethylene (PE), polyphenylene ether (PPE), polyimide (PI), polypropylene (PP), and polyethylene terephthalate (PET).

### [Advantageous Effects]

In the thermocompression finishing tape according to an exemplary embodiment of the present invention, the protective member located on one surface of the second adhesive layer has a length or width greater than that of the second adhesive layer, the base material, and the first adhesive layer, so that the protective member can be easily detached.

In addition, since the protective member includes a porous structure, the adhesive force with the second adhesive layer can be reduced, making it easier to detach the protective member.

### [Brief Description of Drawings]

FIG. 1 is a cross-sectional view showing a thermocompression finishing tape according to an exemplary embodiment of the present invention.
FIG. 2 is a plan view showing an electrode assembly to which the thermocompression finishing tape according to the exemplary embodiment of the present invention is attached.
FIG. 3 is a view showing a sequence of attaching a thermocompression finishing tape according to an exemplary embodiment of the present invention to an electrode assembly.
FIG. 4 is a cross-sectional view showing the electrode assembly according to the exemplary embodiment of the present invention.
FIG. 5 is a perspective view showing a secondary battery according to an exemplary embodiment of the present invention.

### <Explanation of Reference Numerals and Symbols>

1000: secondary battery
100: electrode assembly
110: positive electrode
110a: internal positive electrode
110b: external positive electrode
111: positive electrode tab
120: negative electrode
121: negative electrode tab
130: separator
140: first electrode lead
150: second electrode lead
200: case
210: lower case
211: accommodation groove
212: sealing portion
220: upper case
300: thermocompression finishing tape
310: base material
320: first adhesive layer
330: second adhesive layer
340: first protective member
350: second protective member
351: adhesive portion
352: protrusion

### [Best Mode]

The detailed description of the present invention is intended to completely explain the present invention to one skilled in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

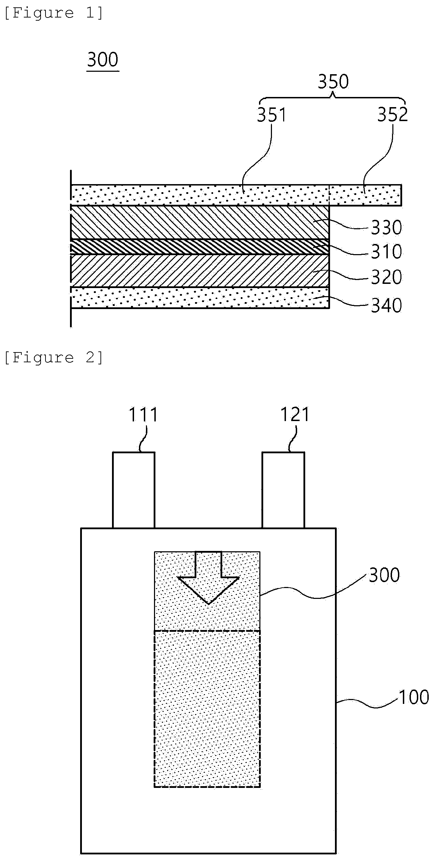

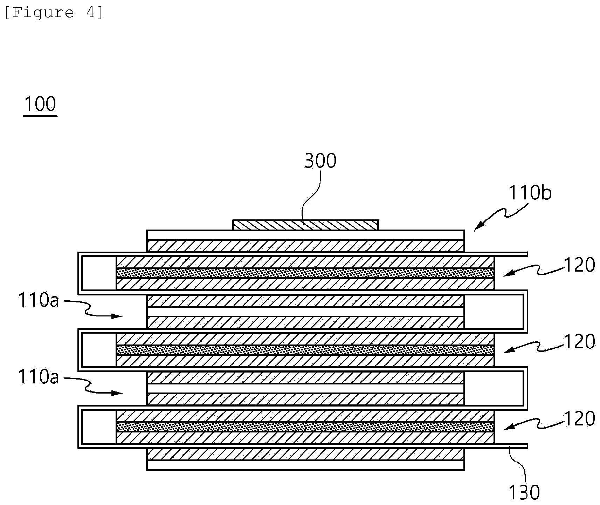

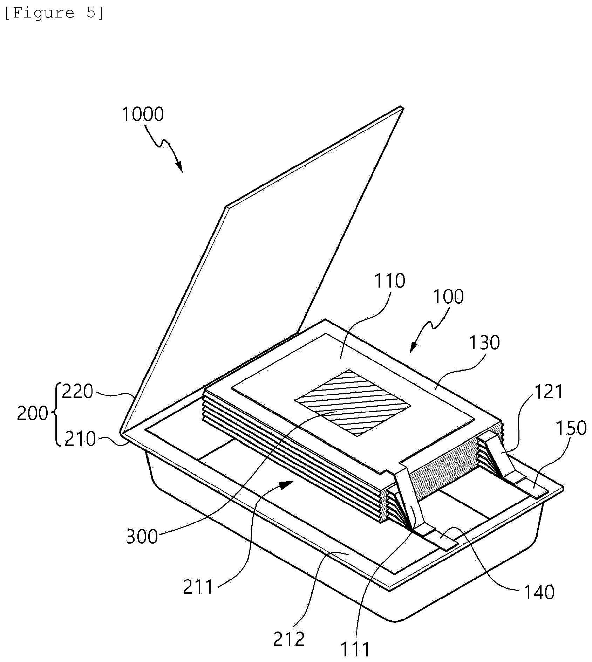

FIG. 1 is a cross-sectional view showing a thermocompression finishing tape 300 according to an exemplary embodiment of the present invention, FIG. 2 is a plan view showing an electrode assembly 100 to which the thermocompression finishing tape 300 according to an exemplary embodiment of the present invention is attached, FIG. 4 is a cross-sectional view showing the electrode assembly 100 according to an exemplary embodiment of the present invention, and FIG. 5 is a perspective view showing a secondary battery 1000 according to an exemplary embodiment of the present invention.

The thermocompression finishing tape 300 includes a base material 310, a first adhesive layer 320, an second adhesive layer 330, a first protective member 340, and a second protective member 350.

In the thermocompression finishing tape 300, the first adhesive layer 320 and the second adhesive layer 330 may be respectively applied to both surfaces of the base material with the base material 310 interposed therebetween. The base material 310 may be provided in the form of a plate or film. The base material 310 may have an insulation property in order to prevent an electrode assembly 100 and a case 200 from being energized through the thermocompression finishing tape 300.

For example, the base material 310 may include a polymer resin film, and the polymer resin may include any one or more of polyethylene (PE), polyphenylene ether (PPE), polyimide (PI), polypropylene (PP), and polyethylene terephthalate (PET). Alternatively, the base material 310 may include the same material as a separator 130 of the electrode assembly 100.

The first adhesive layer 320 is formed by applying a temporary-adhesive material to one surface of the base material 310, and can be in direct contact with the electrode assembly 100 to adhere the thermocompression finishing tape 300 to the electrode assembly 100.

The first adhesive layer 320 includes a pressure-sensitive adhesive. The pressure-sensitive adhesive may be one or more selected from the group consisting of a rubber-based temporary-adhesive, an acrylic temporary-adhesive, and a silicone temporary-adhesive. Preferably, the first adhesive layer may include an acrylic temporary-adhesive. For example, the acrylic temporary-adhesive may include one or more selected from the group consisting of butyl acrylate, ethyl acrylate, methyl methacrylate, vinyl acrylate, 2-ethylhexyl acrylate, hydroxyethyl acrylate, hydroxyethylmethyl acrylate, glycidyl methacrylate, triethylene glycol dimethacrylate, and acrylic acid.

The second adhesive layer 330 is formed by applying an adhesive material to the other surface of the base material 310, that is, a surface of both surfaces of the base material 310 on which the first adhesive layer 320 is not applied. In other words, the second adhesive layer 330 and the first adhesive layer 320 are provided at opposing positions with the base material 310 interposed therebetween.

The second adhesive layer 330 may be in direct contact with an inner surface of the case 200 to adhere the thermocompression finishing tape 300 to the case 200. The second adhesive layer 330 may include a material that has thermal adhesiveness by a sealing temperature of the case 200 when sealing the case 200. The second adhesive layer 330 may include any one or more of a hot melt adhesive, a heat-activated adhesive, and a pressure-sensitive adhesive. Preferably, the second adhesive layer 330 may include a hot melt adhesive.

The second adhesive layer 330 may be made of thermoplastic resin in order to exhibit adhesive force using heat. For example, the thermoplastic resin may be made of one or more selected from the group consisting of polyolefin-based resin, polyvinylchloride-based resin, ethylene-vinyl acetate copolymer-based (EVA-based) resin, polyamide-based resin, polyester-based resins, silicone rubber, and copolymers including the above resins; and a thermoplastic resin having an ionomer structure.

A melting temperature of the second adhesive layer 330 may be lower than 140°C. The melting temperature of the second adhesive layer 330 is preferably lower than 130°C, and more preferably lower than 100°C.

A secondary battery 1000 according to the present invention is made by inserting the electrode assembly 100 into a lower case 210, covering the lower case 210 with an upper case 220, and performing heating and pressurization (or thermocompression) to seal the case 200. In this case, the thermocompression temperature of the case 200 is 100°C to 130°C.

Therefore, the second adhesive layer 330 is melted into a liquid state by the thermocompression temperature of the case 200, and after the thermocompression, the second adhesive layer cools and solidifies by dissipating heat to the surrounding, thereby exhibiting adhesive force.

The melting temperature of the second adhesive layer 330 was determined by using a universal testing machine (UTM) to measure the force (adhesion force) required to peel a finishing tape sample from a pouch at 180° and at a speed of 300±30 mm/min to measure a temperature at which the adhesion force was reduced or was not exhibited. In this case, the thermocompression finishing tape 300 was cut to a width of 1 inch and a length of 1500 mm, the second adhesive layer 330 was attached to the aluminum electrode plate, and then the thermocompression finishing tape attached to the aluminum electrode plate was compressed with a block heated to a temperature lower than 140°C. Then, the force (adhesion force) required to peel the finishing tape sample from the pouch at 180° and at a speed of 300±30 mm/min was measured using a universal testing machine (UTM).

The first protective member 340 is stacked on one surface of the first adhesive layer 320 and is provided at a position opposite to the base material 310. The second protective member 350 is stacked on one surface of the second adhesive layer 330 and is provided at a position opposite to the base material 310. Here, one surface of the first adhesive layer 320 and one surface of the second adhesive layer 330 refer to a surface, on which the base material 310 is not located, of both surfaces of each of the first adhesive layer 320 and the second adhesive layer 330, respectively.

The first protective member 340 and the second protective member 350 can protect the first adhesive layer 320 having temporary-adhesive force and the second adhesive layer 330 having adhesive force. The first protective member 340 and the second protective member 350 should be easily detached from the first adhesive layer 320 and the second adhesive layer 330 in order to secure the first adhesive layer 320 and the second adhesive layer 330 to inner surfaces of the electrode assembly 100 and the case 200, respectively. Therefore, the first protective member 340 and the second protective member 350 may be subjected to release treatment on surfaces facing the first adhesive layer 320 and the second adhesive layer 330. The release treatment may mean that a physical and/or chemical surface treatment is applied to a surface. For example, a surface of a protective film may have an uneven surface, or may be coated with a silicone-based release agent, together with or independently of the uneven surface.

The first protective member 340 and the second protective member 350 may each include a porous structure in order to reduce the temporary-adhesive force and the adhesive force with the first adhesive layer 320 and the second adhesive layer 330, thereby facilitating the detachment of the first protective member 340 and the second protective member 350. That is, the first protective member 340 and the second protective member 350 may each include a porous film, and the porous film may be subjected to release treatment on one surface.

The second protective member 350 may be provided while protruding in an outward direction from one end portion of the second adhesive layer 330. In an exemplary embodiment, a stack of the first adhesive layer 320, the base material 310, and the second adhesive layer 330 may be provided in a quadrangular (square or rectangular) shape, and the second protective member 350 may protrude in the outward direction from one side surface of four surfaces of the stack. Here, the outward direction refers to a direction opposite to a direction from an edge of the stack toward a center of the stack. In other words, the second protective member 350 may protrude from the stack in a direction in which end portions of a positive electrode tab 111 and a negative electrode tab 121 of the electrode assembly 100 are located.

The second protective member 350 may include an adhesive portion 351 in direct contact with the second adhesive layer 330 and a protrusion 352 protruding in the outward direction from an end portion of the second adhesive layer 330. Here, the length refers to a length in a direction of a surface on which the positive electrode tab 111 and the negative electrode tab 121 are located in the electrode assembly 100 and a surface provided at a position opposite to the surface, and the width refers to a length in a direction perpendicular to the length.

The protrusion 352 may protrude 0.5 cm to 8 cm in the outward direction from a boundary with the adhesive portion 351. In other words, the protrusion 352 may protrude 0.5 cm to 8 cm in the outward direction from one end portion of the stack. The protrusion 352 may protrude preferably 1 cm to 5 cm, and more preferably 1 cm to 3 cm in the outward direction.

Since the second protective member 350 includes the protrusion 352, the second protective member 350 can be easily detached from the second adhesive layer 330.

The protrusion 352 of the second protective member 350 according to the present invention may be folded once or more in order to increase easiness of the detachment. Specifically, the protrusion 352 may protrude while being folded once or more toward the center of the second protective member 350.

The protrusion 352 may form a certain angle with the other surface of the second protective member 350, that is, the surface on which the second adhesive layer 330 is not located, and therefore, an attaching and detaching mechanism (not shown) that attaches the thermocompression finishing tape 300 to the electrode assembly 100 and detaches the second protective member 350 can easily grip the second protective member 350.

The second protective member 350 may be detached at a portion of the adhesive portion 351 in contact with an edge of the second adhesive layer 330. Specifically, the second protective member 350 may be detached from the second adhesive layer 330 for a certain length from the boundary between the adhesive portion 351 and the protrusion 352 toward the center of the second protective member 350, that is, toward the center of the stack. By reducing an area where the second protective member 350 and the second adhesive layer 330 adhere to each other, the adhesive force between the second protective member 350 and the second adhesive layer 330 can be reduced.

The second protective member 350 may further include an auxiliary first adhesive layer (not shown) coated with a temporary-adhesive material on a surface opposite to the second adhesive layer 330, that is, a surface opposite to the surface in contact with the second adhesive layer 330. The auxiliary first adhesive layer may include the same temporary-adhesive material as the first adhesive layer 320.

The auxiliary first adhesive layer may increase the adhesive force between the attaching and detaching mechanism and the second protective member 350, thereby increasing the easiness of detachment of the second protective member 350. That is, the temporary-adhesive force between the second protective member 350 and the attaching and detaching mechanism may be greater than the adhesive force between the second protective member 350 and the second adhesive layer 330.

Referring to FIG. 4, the electrode assembly 100 is a power generating element that includes a positive electrode 110, a negative electrode 120, and a separator 130 located between the positive electrode 110 and the negative electrode 120 and can be charged and discharged.

The electrode assembly 100 may include a stacking/folding structure in which the positive electrode 110 and the negative electrode 120 are sequentially stacked on the separator 130 folded in a zigzag shape.

The positive electrode 110 may include a positive electrode current collector, a positive electrode active material part, and a positive electrode tab. The positive electrode current collector is a thin metal plate with excellent conductivity and may include, for example, an aluminum (Al) foil.

The positive electrode 110 is coated with a positive electrode active material on one surface or both surfaces of the plate-shaped positive electrode current collector, and an uncoated portion not coated with the positive electrode active material may be cut into a positive electrode tab shape to form the positive electrode tab 111.

The positive electrode active material may include a lithium cobalt oxide with a high operating voltage and excellent capacity characteristics, a lithium nickel oxide with a high reversible capacity and easy to implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode 120 may include a negative electrode current collector, a negative electrode active material part, and a negative electrode uncoated portion. The negative electrode current collector may include a thin metal plate with excellent conductivity, for example, a copper (Cu) or nickel (Ni) foil.

The negative electrode 120 is coated with a negative electrode active material on one surface or both surfaces of the negative electrode current collector, the negative electrode active material part is formed by coating or applying a negative electrode active material, and the negative electrode uncoated portion not coated or applied with the negative electrode active material may be cut into a negative electrode tab shape to form the negative electrode tab 121.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The positive electrode tab 111 and the negative electrode tab 121 transfer electrons collected in the current collector to an external circuit and may protrude in opposite directions or in the same direction from the electrode assembly of the stacking/folding structure.

An area of the negative electrode 120 included in the electrode assembly according to the present invention may be greater than that of the positive electrode 110. Therefore, the area of the negative electrode 120 is set to be greater than the area of the corresponding positive electrode 110, so that lithium can be prevented from precipitating on the negative electrode 120.

The separator 130 prevents an internal short-circuit that may be caused when the positive electrode 110 and the negative electrode 120 come into contact with each other, and may include a porous material to facilitate migration of ions between the electrodes.

In an exemplary embodiment, the separator 130 may include a base material layer made of a porous material. The base material layer may include, for example, any one selected from the group consisting of polyethylene (PE), polystyrene (PS), polypropylene (PP), and a copolymer of polyethylene (PE) and polypropylene (PP).

In another exemplary embodiment, the separator 130 may include a safety reinforced separator (SRS). That is, the separator 130 may include a base material layer made of a porous material and a coating layer coated and formed on the base material layer by applying mixed slurry of inorganic particles and a binder polymer. Preferably, the coating layer includes ceramic particles and has a uniform pore structure formed by an interstitial volume between the ceramic particles that are a component of an active layer, in addition to a pore structure of the separator base material itself.

The coating layer may include ceramic particles including at least one selected from the group consisting of alumina, silica, TiO₂, SiC, and MgAl₂O₄. Such a coating layer is included, so that the safety of the electrode assembly can be enhanced. The coating layer may further include a lithium salt.

The electrode assembly 100 according to the present invention may include an internal positive electrode 110a and an external positive electrode 110b.

More specifically, the electrode assembly 100 may have a structure in which an external positive electrode 110b is stacked on the outermost layer of the stack in which the positive electrode and the negative electrode are stacked between spaces formed by the separator 130 folded in the zigzag shape. Here, the positive electrodes located between the spaces formed by the separator 130 folded in the zigzag shape are the internal positive electrodes 110a, and the positive electrodes located at the top and the bottom of the stack 101 are the external positive electrodes 110b. The internal positive electrode 110a may be coated with a positive electrode active material on both surfaces of the positive electrode current collector, and the external positive electrode 110b may be coated with a positive active material on only one surface of the positive electrode current collector.

The external positive electrode 110b may have the same area as the internal positive electrode 110a or may be smaller.

The external positive electrode 110b includes a first surface coated with a positive electrode active material and a second surface not coated with the positive electrode active material. The external positive electrode 110b may include a first insulating member located on the first side and covering the positive electrode active material and the positive electrode tab 111, and a second insulating member located on the second side.

The thermocompression finishing tape 300 according to the present invention may be located on the second surface of the external positive electrode 110b located at the top of the stack 101.

Referring to FIG. 5, the secondary battery 1000 includes an electrode assembly 100, a case 200, and a thermocompression finishing tape 300.

The case 200 includes a lower case 210 in which the electrode assembly 100 is accommodated and an upper case 220 coupled to the lower case 210. The case 200 may be divided into the upper case 220 and the lower case 210 by bending the middle of a rectangular pouch membrane formed as one piece. In addition, the lower case 210 is formed with an accommodation groove 211 to accommodate the electrode assembly 100 through press processing or the like, and a sealing portion 212 for sealing with the upper case 220. The sealing portion 212 may be formed along one side and the remaining three sides where the upper case 220 and the lower case 210 are in integral contact. The case 200 includes two long sides where the upper case 220 and the lower case 210 face each other, and two short sides facing each other perpendicularly to the two long sides. Here, a first electrode lead 140 and a second electrode lead 150 of the electrode assembly 100 are pulled out through a short side, which is on an opposite side to a side where the upper case 220 and the lower case 210 are connected, of the two short sides. In this case, insulating members (not shown) are attached to the first electrode leads 140 and the second electrode lead 150, respectively, preventing short-circuits between the first and second electrode leads 140 and 150 and the case 200.

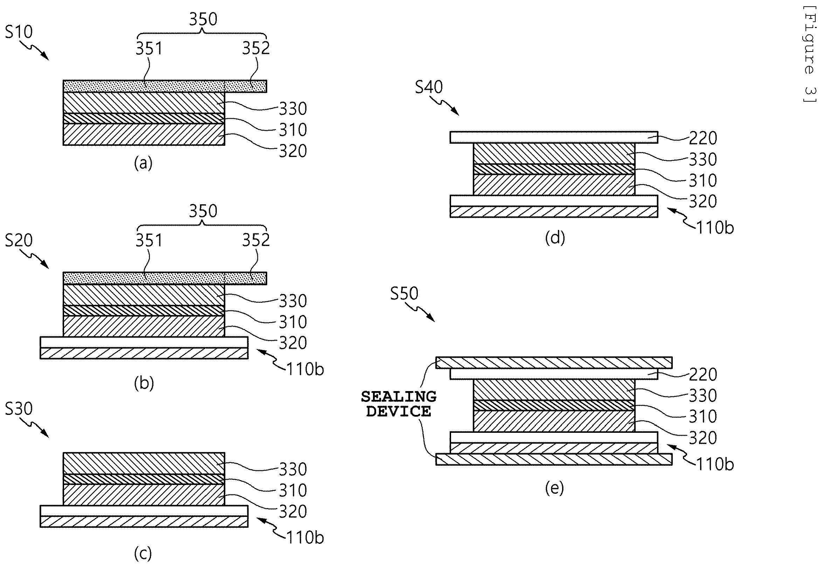

FIG. 3 is a view showing a sequence of a process of manufacturing a secondary battery including the electrode assembly 100 to which the thermocompression finishing tape 300 according to an exemplary embodiment of the present invention is temporarily adhered.

The secondary battery manufacturing process includes detaching the first protective member 340 (S10), temporarily adhering the first adhesive layer 320 to the electrode assembly 100, specifically, the second surface of the external positive electrode 110b stacked on the top of the stack 101 (S20), detaching the second protective member 350 (S30), inserting the electrode assembly 100 to which the thermocompression finishing tape 300 is temporarily adhered into the accommodation groove 211 of the lower case 210 and then coupling the lower case 210 and the upper case 220 to adhere the second adhesive layer 330 to an inner surface of the upper case 220 (S40), and sealing the lower case 210 and the upper case 220 by thermocompression (S50).

Although the present invention has been described with reference to preferred embodiments, it will be understood by one skilled in the art that various modifications and variations can be made in the present invention without departing from the technical spirit and scope of the present invention.

## Claims

1. A thermocompression finishing tape comprising:
a base material;
a first adhesive layer stacked on one surface of the base material;
an second adhesive layer stacked on the other surface of the base material;
a first protective member provided on one surface of the first adhesive layer opposite to the base material; and
a second protective member provided on one surface of the second adhesive layer opposite to the base material,
wherein the second protective member protrudes in an outward direction beyond at least one end portion of the second adhesive layer.

2. The thermocompression finishing tape of claim 1, wherein the first protective member and the second protective member each comprise a porous film, respectively, and one surface of each porous film is release-treated.

3. The thermocompression finishing tape of claim 1, wherein an auxiliary first adhesive layer is stacked on a surface of the second protective member opposite to the second adhesive layer.

4. The thermocompression finishing tape of claim 1, wherein the second protective member comprises an adhesive portion in direct contact with the second adhesive layer and a protrusion protruding outward beyond an end portion of the second adhesive layer, and
wherein the protrusion is folded one or more times in a direction towards a center of the second protective member.

5. The thermocompression finishing tape of claim 4, wherein the second protective member is detached at a part of the adhesive portion in contact with an edge of the second adhesive layer.

6. The thermocompression finishing tape of claim 1, wherein the first adhesive layer comprises one or more selected from the group consisting of a rubber-based adhesive, an acrylic adhesive, and a silicone adhesive.

7. The thermocompression finishing tape of claim 1, wherein a melting temperature of the second adhesive layer is lower than 140°C.

8. The thermocompression finishing tape of claim 7, wherein the second adhesive layer comprises any one or more of a hot melt adhesive, a heat-activated adhesive, and a pressure-sensitive adhesive.

9. The thermocompression finishing tape of claim 1, wherein the base material has an insulation property.

10. The thermocompression finishing tape of claim 9, wherein the base material comprises a polymer resin film, and
wherein the polymer resin comprises any one or more of polyethylene (PE), polyphenylene ether (PPE), polyimide (PI), polypropylene (PP), and polyethylene terephthalate (PET).
